# EUROPÄISCHE PATENTSCHRIFT

(11) **EP 3 738 851 B1**
(45) Veröffentlichungstag und Bekanntmachung des Hinweises auf die Patenterteilung: **05.03.2025**
(21) Anmeldenummer: 20163324.5
(22) Anmeldetag: 16.03.2020
(51) Int. Cl.: B60W 30/12, B60W 50/14, B60W 40/06

(54) **ERKENNEN EINER BANKETTFAHRT EINES KRAFTFAHRZEUGS**
DETECTION OF A MOTOR VEHICLE DRIVING ONTO THE HARD SHOULDER
DÉTECTION D'UNE CONDUITE LE LONG DE L'ACCOTEMENT D'UN VÉHICULE AUTOMOBILE

(30) Priorität: 13.05.2019 DE 102019206875
(43) Veröffentlichungstag der Anmeldung: 18.11.2020
(73) Patentinhaber: VOLKSWAGEN AG, 38440 Wolfsburg (DE)
(72) Erfinder: Bartels, Arne, 38448 Wolfsburg (DE); Kolms, Thomas, 38553 Wasbüttel (DE); Klingemann, Timo, 38524 Sassenburg (DE); Krings, Robin, 50226 Frechen (DE); Sakpal, Amogh, 50321 Brühl (DE)

(56) Entgegenhaltungen:
- EP-A2- 1 538 019
- EP-B1- 1 538 019
- DE-A1- 102008 058 152
- DE-A1- 102009 000 079
- US-A1- 2014 032 108
- US-A1- 2014 249 718

## Beschreibung

Die Erfindung betrifft ein Verfahren zum Erkennen einer Bankettfahrt eines Kraftfahrzeugs, wobei wenigstens eine Messgröße mittels wenigstens einer Sensoreinheit des Kraftfahrzeugs erfasst wird. Die Erfindung betrifft weiterhin ein entsprechendes System zum Erkennen einer Bankettfahrt eines Kraftfahrzeugs sowie ein Computerprogramm.

Durch das Abkommen eines Kraftfahrzeugs von der Fahrbahn in ein Bankett, also in einen unbefestigten Bereich seitlich neben der Fahrbahn, können schwere Unfälle im Straßenverkehr verursacht werden. Beim Versuch, das Fahrzeug zurück auf die Fahrbahn zu führen, kann diese kritische Fahrsituation insbesondere durch übermäßige Lenk- oder Bremsaktionen des Fahrers verschärft werden. Um den Fahrer in einer solchen Situation zu unterstützen, können automatisierte Brems- oder Lenkeingriffe mittels eines Fahrerassistenzsystems des Kraftfahrzeugs vorgenommen werden. Damit ein solches Fahrerassistenzsystem angemessen reagieren kann, ist es erforderlich, dass das Vorliegen einer Bankettfahrt zuverlässig erkannt wird.

Das Dokument EP 15 38 019 A2 beschreibt ein Fahrerassistenzsystem, bei dem mittels einer Stereokamera überwacht wird, ob ein Fahrzeug von der Fahrbahn abkommt.

Im Dokument US 2015/0203109 A1 wird ebenfalls eine Kamera eingesetzt, um zu bestimmen, ob ein Fahrzeug von der Fahrbahn abkommt. Dazu wird ein vorhergesagter Fahrzeugpfad mit einem tatsächlichen Fahrzeugpfad verglichen.

Eine Überwachung der Kraftfahrzeugumgebung, beispielsweise durch ein Kamerasystem, alleine reicht jedoch nicht aus, um eine zuverlässige Detektion einer Bankettfahrt zu gewährleisten. Kamerasysteme können beispielsweise eine Fahrzeugposition anhand von Fahrstreifenmarkierungslinien erkennen. Sind diese stark verschmutzt, verdeckt oder nicht vorhanden, kann ein Kamerasystem eine Bankettfahrt nicht zuverlässig erkennen.

Dokument DE 10 2009 000079 A1 beschreibt ein Verfahren zum Erkennen eines gefährlichen Fahrzustandes eines Fahrzeugs. Dazu wird ein Dämpfersignal erfasst, das einen zeitlichen Verlauf einer Vertikalbewegung eines Rads des Fahrzeugs abbildet. Als Messgröße wird dazu mittels eines Drucksensors die Einfedergeschwindigkeit gemessen. Aus dieser Messgröße werden ein Mittelwert und eine Streuung berechnet und mit jeweiligen Schwellwerten verglichen. Werden beide Schwellwerte überschritten, so wird für das betreffende Rad ein Merker gesetzt. Es wird erwähnt, dass mit ziemlicher Sicherheit darauf geschlossen werden kann, dass das Fahrzeug gerade die befestigte Fahrbahn verlässt, wenn bei einem der Räder der Merker gesetzt wird und kurz danach auch für das dahinterliegende Rad der Merker gesetzt wird.

Vor diesem Hintergrund ist es eine Aufgabe der vorliegenden Erfindung, ein verbessertes Konzept zum Erkennen einer Bankettfahrt eines Kraftfahrzeugs anzugeben, mit welchem das Vorliegen der Bankettfahrt mit einer höheren Zuverlässigkeit bestimmt werden kann.

Erfindungsgemäß wird diese Aufgabe durch ein Verfahren, ein System und ein Computerprogramm nach den unabhängigen Ansprüchen gelöst. Vorteilhafte Weiterbildungen und weitere Ausführungsformen sind Gegenstand der abhängigen Patentansprüche.

Das verbesserte Konzept beruht auf der Idee, in einem zweistufigen Vorgehen zunächst Einzelkonfidenzwerte für das Vorliegen einer Bankettfahrt zu bestimmen, wobei die Einzelkonfidenzwerte auf unterschiedlichen Arten von Messgrößen beruhen. In der zweiten Stufe wird basierend auf den Einzelkonfidenzwerten ein Gesamtkonfidenzwert für das Vorliegen der Bankettfahrt ermittelt.

Gemäß einem ersten unabhängigen Aspekt des verbesserten Konzepts wird ein Verfahren zum Erkennen einer Bankettfahrt eines Kraftfahrzeugs angegeben, wobei wenigstens eine Messgröße mittels wenigstens einer Sensoreinheit des Kraftfahrzeugs erfasst, insbesondere gemessen, wird. Basierend auf der wenigstens einen Messgröße wird mittels einer Recheneinheit des Kraftfahrzeugs ein erster Kontrollwert, welcher eine Radbewegung eines Rads des Kraftfahrzeugs betrifft, bestimmt. Weiterhin wird basierend auf der wenigstens einen Messgröße mittels der Recheneinheit ein zweiter Kontrollwert bestimmt, welcher eine von einer Geschwindigkeit des Kraftfahrzeugs abhängige Fahrzeugzustandsgröße des Kraftfahrzeugs betrifft. Mittels der Recheneinheit wird basierend auf einem Vergleich des ersten Kontrollwerts mit einem ersten Grenzwert ein erster Konfidenzwert für das Vorliegen einer Bankettfahrt bestimmt. Mittels der Recheneinheit wird basierend auf einem Vergleich des zweiten Kontrollwerts mit einem zweiten Grenzwert ein zweiter Konfidenzwert für das Vorliegen der Bankettfahrt bestimmt. Mittels der Recheneinheit wird schließlich basierend auf dem ersten und dem zweiten Konfidenzwert ein Gesamtkonfidenzwert für das Vorliegen der Bankettfahrt bestimmt.

Unter einer Bankettfahrt eines Kraftfahrzeugs kann hier und im Folgenden verstanden werden, dass sich wenigstens ein Rad des Kraftfahrzeugs während einer Fahrt des Kraftfahrzeugs auf oder in einem Bankett befindet, während sich wenigstens ein weiteres Rad des Kraftfahrzeugs, insbesondere ein auf einer bezüglich des Rades gegenüberliegenden Seite des Kraftfahrzeugs befindliches weiteres Rad, nicht in dem Bankett, sondern insbesondere auf einer Fahrbahn befindet. Insbesondere befinden sich bei einem Kraftfahrzeug mit vier Rädern bei einer Bankettfahrt beispielsweise ein rechtes oder ein linkes Rad im Bankett, während sich alle anderen Räder auf der Fahrbahn befinden oder es befinden sich beide rechten Räder oder beide linken Räder im Bankett, während sich die übrigen beiden Räder jeweils auf der Fahrbahn befinden.

Unter einer Fahrbahn kann hier und im Folgenden ein befestigter Bereich verstanden werden, der für einen regulären Kraftfahrzeugverkehr vorgesehen ist, also insbesondere eine befestigte Straße, beispielsweise eine asphaltierte Straße, eine Betonstraße oder eine Pflasterstraße.

Unter einem Bankett kann hier und im Folgenden ein unbefestigter Bereich neben der Fahrbahn, insbesondere seitlich neben der Fahrbahn, verstanden werden. Das Bankett kann beispielsweise einen Rasenbelag, einen Schotterbelag, einen Schotterrasen oder einen anderen, nicht befestigten Belag aufweisen. Insbesondere unterscheidet sich eine Oberflächenbeschaffenheit des Banketts von der Oberflächenbeschaffenheit der Fahrbahn

Insbesondere unterscheiden sich jeweilige Reibwerte eines Rads des Kraftfahrzeugs auf der Fahrbahn beziehungsweise auf dem Bankett. Der Reibwert auf der Fahrbahn ist insbesondere höher als der Reibwert auf dem Bankett. Bei einer Bankettfahrt liegt dementsprechend eine sogenannte µ-Split-Situation vor.

Bei den Kontrollwerten kann es sich jeweils um einen Wert der wenigstens einen Messgröße handeln oder um einen Mittelwert einer oder mehrerer der wenigstens einen Messgröße, wobei die Mittelung über ein vorgegebenes Zeitintervall erfolgt, oder um eine aus einer oder mehreren der wenigstens einen Messgröße abgeleitete Größe oder deren zeitlicher Mittelwert in dem vorgegebenen Zeitintervall.

Die Radbewegung des Rads kann beispielsweise eine vertikale Bewegung des Rads, also eine Bewegung, welche im Wesentlichen parallel zu einer Vertikalachse des Kraftfahrzeugs und/oder einer Normalachse eines Untergrunds, auf dem sich das Kraftfahrzeug befindet, also einer Normalachse des Banketts und/oder der Fahrbahn, insbesondere relativ zu einer Karosserie des Kraftfahrzeugs beinhalten. Beispielsweise kann die vertikale Radbewegung durch einen Einfederweg der dem jeweiligen Rad zugeordneten Federung oder eine Dämpferbeschleunigung des dem jeweiligen Rad zugeordneten Dämpfers charakterisiert werden. Der erste Kontrollwert kann dementsprechend basierend auf dem Einfederweg oder der Dämpferbeschleunigung oder einer sonstigen, die vertikale Bewegung des Rads relativ zur Karosserie charakterisierende Messgröße bestimmt werden.

Die Radbewegung kann auch eine horizontale Bewegung, also eine Bewegung des Rads in einer Ebene senkrecht zur Vertikalachse des Kraftfahrzeugs, also in einer Ebene, die durch eine Longitudinalachse und eine Querachse des Kraftfahrzeugs aufgespannt wird, insbesondere relativ zum Untergrund, also relativ zur Fahrbahn oder zum Bankett, beinhalten. Ein Radschlupf des Rades kann beispielsweise die horizontale Radbewegung charakterisieren. Der erste Kontrollwert kann also entsprechend auch basierend auf dem Radschlupf, insbesondere einem gemessenen oder von einer Messgröße abgeleiteten Radschlupf, oder einer sonstigen, die horizontale Bewegung des Rades charakterisierenden Messgröße bestimmt werden.

Der erste Kontrollwert kann auch basierend auf mehreren Messgrößen, welche die vertikale und/oder die horizontale Radbewegung charakterisieren, bestimmt werden.

Insbesondere beschreibt die Radbewegung eine Bewegung, insbesondere eine Geschwindigkeit, der Karosserie wenigstens nicht unmittelbar. Dies bedeutet, dass die Kenntnis einer Messgröße, welche die Radbewegung beschreibt, beispielsweise nicht ausreicht, um eine Karosseriegeschwindigkeit eindeutig zu bestimmen. Es kann jedoch durchaus sein, dass eine Messgröße sowohl zur Berechnung einer die Radbewegung charakterisierenden Größe, beispielsweise des Radschlupfs, als auch zur Bestimmung der Karosseriegeschwindigkeit oder Beschleunigung dienen kann. Beispielsweise kann eine Raddrehzahl zum einen zur Berechnung eines Radschlupfs, zum anderen, bei Kenntnis des Raddurchmessers, auch zur Berechnung der Karosseriegeschwindigkeit herangezogen werden.

Bei der von der Geschwindigkeit des Kraftfahrzeugs abhängigen Fahrzeugzustandsgröße des Kraftfahrzeugs handelt es sich insbesondere um eine Längs- oder Quergeschwindigkeit der Karosserie oder eine von der Längs- oder Quergeschwindigkeit abgeleitete Größe wie beispielsweise eine Längs- oder Querbeschleunigung der Karosserie. Bei der Fahrzeugzustandsgröße kann es sich auch um eine Rotationsgeschwindigkeit oder eine von der Rotationsgeschwindigkeit abgeleitete Größe handeln, beispielsweise eine Rotationsrate oder eine Rotationsbeschleunigung. Beispielsweise kann es sich um eine Gierrate oder Giergeschwindigkeit der Karosserie handeln.

Unter einem Konfidenzwert für das Vorliegen der Bankettfahrt kann hier und im Folgenden eine geschätzte Wahrscheinlichkeit oder ein Kennwert für die Wahrscheinlichkeit dafür verstanden werden, dass tatsächlich eine Bankettfahrt vorliegt. Der Gesamtkonfidenzwert kann daher als Ergebnis des Verfahrens zum Erkennen der Bankettfahrt betrachtet werden. Insbesondere kann die Bankettfahrt als erkannt definiert werden, wenn der Gesamtkonfidenzwert größer ist als ein vorgegebener Mindestwert für die Gesamtkonfidenz.

Der erste und der zweite Konfidenzwert werden mittels der Recheneinheit mit unterschiedlichen Gewichtungsfaktoren gewichtet. Der Gesamtkonfidenzwert wird basierend auf dem gewichteten ersten und dem gewichteten zweiten Konfidenzwert bestimmt.

Aufgrund des unterschiedlichen Ursprungs der einzelnen Konfidenzwerte, insbesondere aufgrund der unterschiedlichen Berechnungs- oder Messmethoden oder unterschiedlichen Sensortypen, können die einzelnen Kontrollwerte verschieden zuverlässige Konfidenzwerte erzeugen. Durch die Gewichtung kann dies entsprechend berücksichtigt werden, indem zuverlässigeren Konfidenzwerten höhere Gewichte bei der Bestimmung des Gesamtkonfidenzwertes zukommen als weniger zuverlässigen. Die gesamte Zuverlässigkeit der Bestimmung des Vorliegens der Bankettfahrt wird damit verbessert.

Die wenigstens eine Messgröße kann beispielsweise eine Raddrehzahl, einen Radhöhenstand, eine Beschleunigung, beispielsweise eine longitudinale Beschleunigung oder Längsbeschleunigung, eine laterale Beschleunigung oder Querbeschleunigung oder eine vertikale Beschleunigung der Karosserie beinhalten. Die wenigstens eine Messgröße kann beispielsweise eine Rotationsbeschleunigung, insbesondere um die Normalachse des Kraftfahrzeugs als Rotationsachse, ein Lenkmoment, den Einfederweg des Rads, eine Dämpferbeschleunigung, einen Dämpferweg, eine Dämpferposition oder eine Dämpfergeschwindigkeit eines Dämpfers, welcher dem Rad zugeordnet ist, oder weitere Messgrößen beinhalten. Die wenigstens eine Sensoreinheit enthält einen entsprechenden Sensor oder ein entsprechendes Sensorsystem zur Messung oder Bestimmung der jeweiligen Messgröße.

Mit einem Verfahren nach dem verbesserten Konzept werden zunächst in einer ersten Stufe der erste und der zweite Konfidenzwert bestimmt, welche an sich bereits eine Wahrscheinlichkeit des Vorliegens der Bankettfahrt abschätzen. Die beiden Konfidenzwerte werden jedoch beispielsweise weiterverarbeitet, insbesondere gewichtet, um den Gesamtkonfidenzwert in einer zweiten Stufe des Verfahrens zu bestimmen. Damit kann eine Zuverlässigkeit der Erkennung der Bankettfahrt erhöht werden. Insbesondere kann eine Wahrscheinlichkeit für falsch positive Detektionen oder falsch negative Nicht-Detektionen der Bankettfahrt reduziert werden.

Die verbesserte Zuverlässigkeit geht insbesondere darauf zurück, dass unterschiedliche Arten von Kontrollwerten oder Messgrößen verwendet werden. Einflüsse auf eine Messgröße, welche zur Verfälschung des ersten Konfidenzwerts führen, führen also nicht zwingend auch zur Verfälschung des zweiten Konfidenzwerts oder umgekehrt. Die wenigstens teilweise Unabhängigkeit der beiden Konfidenzwerte voneinander durch die Verwendung unterschiedlicher Messgrößen und/oder Kontrollwerte zu deren Bestimmung erhöht die Aussagekraft des Gesamtkonfidenzwerts.

Ein weiterer Vorteil des verbesserten Konzepts ist es, dass entsprechende Sensoren zur Bestimmung der Messgrößen, welche zur Ermittlung der Kontrollwerte herangezogen werden, in der Regel nicht speziell für das Verfahren zur Erkennung der Bankettfahrt vorgesehen werden müssen. Sensoren, wie sie oben beschrieben wurden, liegen in modernen Fahrzeugen häufig ohnehin vor und werden für andere Zwecke verwendet. Zahlreiche Fahrerassistenzsysteme, greifen auf solche Sensoren zurück. Damit kann insbesondere ein Synergieeffekt erzielt werden, da mit gegebenenfalls im Kraftfahrzeug ohnehin vorhandenen Sensoren eine besonders zuverlässige Bankettfahrterkennung ermöglicht wird. Beispielsweise können Radbewegungssensoren, also Sensoren, welche Messgrößen erfassen, die zur Bestimmung der Radbewegung dienen, in Dynamic Chassis Control Systemen, DCC, eingesetzt werden oder Raddrehzahlsensoren können beispielsweise für Systeme zur Fahrdynamikregelung, ESC (englisch: Electronic Stability Control) verwendet werden.

Gemäß zumindest einer Ausführungsform des Verfahrens zum Erkennen einer Bankettfahrt wird mittels der Recheneinheit basierend auf dem Gesamtkonfidenzwert ein Warnsignal, insbesondere für den Fahrer des Kraftfahrzeugs, erzeugt und ausgegeben. Alternativ oder zusätzlich kann mittels der Recheneinheit eine teilweise oder vollständig automatische Korrekturmaßnahme eingeleitet werden um die Bankettfahrt zu beenden, beispielsweise durch einen automatischen Eingriff in die Lenkung des Kraftfahrzeugs oder durch einen Einzelradbremseingriff.

Gemäß zumindest einer Ausführungsform werden basierend auf der wenigstens einen Messgröße mittels der Recheneinheit einer oder mehrere zusätzliche erste Kontrollwerte bestimmt, welche jeweils eine weitere Radbewegung des Rads betreffen.

Gemäß zumindest einer Ausführungsform werden mittels der Recheneinheit basierend auf der wenigstens einen Messgröße einer oder mehrere zusätzliche zweite Kontrollwerte bestimmt, welche jeweils eine Geschwindigkeitsgröße, beispielsweise eine weitere Geschwindigkeitsgröße, des Kraftfahrzeugs betreffen.

Für jeden der zusätzlichen ersten und/oder der zusätzlichen zweiten Kontrollwerte wird basierend auf einem Vergleich mit einem zugehörigen ersten und/oder zweiten zusätzlichen Grenzwert ein jeweiliger erster und/oder zweiter zusätzlicher Konfidenzwert für das Vorliegen der Bankettfahrt bestimmt. Der Gesamtkonfidenzwert wird dann basierend auf dem ersten und dem zweiten Konfidenzwert sowie auf den zusätzlichen ersten und zweiten Konfidenzwerten bestimmt.

Durch die Verwendung mehrerer Kontrollwerte derselben Art, also solcher, die jeweils eine Radbewegung oder eine Fahrzeugzustandsgröße betreffen, kann die Zuverlässigkeit des Verfahrens weiter erhöht werden. Alle bestimmten Kontrollwerte können optional entsprechend gewichtet werden, um den Gesamtkonfidenzwert zu bestimmen.

Der vorgegebene Satz von Gewichtungsfaktoren kann beispielsweise auf empirisch gewonnenen Erfahrungen festgelegt werden und/oder basierend auf Verfahren zum maschinellen Lernen ermittelt werden.

Gemäß zumindest einer Ausführungsform des Verfahrens wird mittels der wenigstens einen Sensoreinheit ein Fahrbahnkennwert, beispielsweise ein Fahrbahnoberflächenkennwert, erzeugt und/oder es wird ein Umfeldsensorsignal erzeugt. Mittels der Recheneinheit wird, insbesondere vor dem Bestimmen des Gesamtkonfidenzwerts, beispielsweise vor dem Bestimmen des ersten und zweiten Konfidenzwerts und/oder vor dem Bestimmen des ersten und zweiten Kontrollwerts, basierend auf dem Fahrbahnkennwert und/oder dem Umfeldsensorsignal bestimmt, ob das Vorliegen der Bankettfahrt ausgeschlossen werden kann.

Darunter, dass das Vorliegen der Bankettfahrt ausgeschlossen werden kann, kann verstanden werden, dass eine ausreichend hohe, also vordefinierte, Wahrscheinlichkeit dafür ermittelt werden kann, dass die Bankettfahrt nicht vorliegt, insbesondere basierend auf Größen oder Messwerten oder Parametern, die nicht zur Bestimmung des ersten oder zweiten Kontrollwerts verwendet werden.

Bei dem Umfeldsensorsignal handelt es sich insbesondere um ein Signal der wenigstens einen Sensoreinheit, welches zur Erfassung eines Abbilds eines Umfelds des Kraftfahrzeugs, also einer Umgebung des Kraftfahrzeugs, erzeugt wird. Dabei kann es sich beispielsweise um ein Signal einer Kamera oder eines sonstigen optischen Sensorsystems, beispielsweise eines Lidarsystems, eines Radarsystems oder eines Ultraschallsensorsystems der wenigstens einen Sensoreinheit handeln.

Beispielsweise kann das Vorliegen der Bankettfahrt ausgeschlossen werden, wenn basierend auf dem Umfeldsensorsignal ermittelt wird, dass auf beiden Seiten des Fahrzeugs, also links und rechts von dem Kraftfahrzeug, Fahrstreifenmarkierungslinien sichtbar sind und das Kraftfahrzeug zwischen diesen Fahrstreifenmarkierungslinien fährt und/oder auf beiden Seiten von dem Kraftfahrzeug, also links und rechts von dem Kraftfahrzeug, Fahrbahnkanten der Fahrbahn, welche insbesondere die Fahrbahn von dem Bankett trennen, sichtbar sind und das Fahrzeug zwischen diesen Fahrbahnkanten fährt.

Bei dem Fahrbahnkennwert kann es sich insbesondere um einen Kennwert oder Messwert für eine Oberflächenbeschaffenheit des Untergrunds, auf welchem das Fahrzeug fährt, handeln. Beispielsweise kann es sich bei dem Fahrbahnkennwert um einen Kennwert oder einen Messwert für eine Oberflächenrauigkeit des Untergrunds handeln. Beispielsweise kann abhängig von dem Fahrbahnkennwert das Vorliegen der Bankettfahrt ausgeschlossen werden, wenn der Bereich, auf welchem das Kraftfahrzeug fährt, abhängig von dem Fahrbahnkennwert mit einer erforderlichen Wahrscheinlichkeit als Fahrbahn und insbesondere nicht als Bankett detektiert werden kann.

In solchen Ausgestaltungsformen kann basierend auf dem Umfeldsensorsignal oder dem Fahrbahnkennwert eine Voranalyse vorgenommen werden, um falsche Positiverkennungen der Bankettfahrt durch die Auswertung des ersten und des zweiten Kontrollwertes zu vermeiden. Damit kann die Zuverlässigkeit des Verfahrens weiter erhöht werden.

In verschiedenen Ausführungsformen wird der Gesamtkonfidenzwert nur dann bestimmt oder nur dann weiterverwendet, wenn das Vorliegen der Bankettfahrt nicht basierend auf dem Umfeldsensorsignal und/oder dem Fahrbahnkennwert ausgeschlossen werden kann. Optional können auch die Schritte des Bestimmens der Kontrollwerte und/oder der ersten und zweiten Kompetenzwerte in einem solchen Fall unterbleiben.

In solchen Ausführungsformen kann beispielsweise die Voranalyse, also das Bestimmen, ob das Vorliegen der Bankettfahrt ausgeschlossen werden kann, wiederholt oder kontinuierlich durchgeführt werden. Sie Schritte des Bestimmens der Kontrollwerte und der Konfidenzwerte werden nur dann, insbesondere genau dann, durchgeführt, wenn das Vorliegen der Bankettfahrt basierend auf der Voranalyse nicht oder nicht mit ausreichender Wahrscheinlichkeit ausgeschlossen werden kann.

Gemäß zumindest einer Ausführungsform wird wenigstens ein weiteres Umfeldsensorsignal mittels der wenigstens einen Sensoreinheit erzeugt und basierend auf dem wenigstens einen weiteren Umfeldsensorsignals wird mittels der Recheneinheit ein dritter Kontrollwert bestimmt. Basierend auf einem Vergleich des dritten Kontrollwerts mit einem dritten Grenzwert wird mittels der Recheneinheit ein dritter Konfidenzwert für das Vorliegen der Bankettfahrt bestimmt. Der Gesamtkonfidenzwert wird basierend auf dem ersten, dem zweiten und dem dritten Konfidenzwert bestimmt.

Durch die Verwendung einer dritten Art von Kontrollwerten, also neben dem ersten und dem zweiten Kontrollwert eines dritten Kontrollwerts, welcher aus der Überwachung oder Abbildung des Umfelds des Kraftfahrzeugs hervorgeht, kann die Anzahl der wenigstens teilweise unabhängigen Eingangsgrößen zur Bestimmung des Gesamtkonfidenzwerts und damit die Zuverlässigkeit des gesamten Verfahrens zur Erkennung beziehungsweise zum Bestimmen des Vorliegens der Bankettfahrt weiter erhöht werden.

In verschiedenen Ausführungsformen werden mittels der Recheneinheit einer oder mehrere zusätzliche dritte Kontrollwerte bestimmt und basierend auf jeweiligen Vergleichen der zusätzlichen dritten Kontrollwerte mit entsprechenden zusätzlichen dritten Grenzwerten werden zusätzliche dritte Konfidenzwerte für das Vorliegen der Bankettfahrt bestimmt. Die zusätzlichen dritten Konfidenzwerte werden zusätzlich bei der Bestimmung des Gesamtkonfidenzwerts berücksichtigt.

Gemäß zumindest einer Ausführungsform wird basierend auf der wenigstens einen Messgröße mittels der Recheneinheit ein weiterer erster Kontrollwert bestimmt, welcher eine Radbewegung eines weiteren Rads des Kraftfahrzeugs betrifft, wobei das Rad und das weitere Rad auf gegenüberliegenden Fahrzeugseiten des Kraftfahrzeugs angeordnet sind. Mittels der Recheneinheit wird basierend auf einem Vergleich des ersten Kontrollwerts mit dem ersten weiteren Kontrollwert eine der Fahrzeugseiten als Seite der Bankettfahrt identifiziert.

Bei den Fahrzeugseiten handelt es sich insbesondere um eine linke und eine rechte Seite des Kraftfahrzeugs.

Als Seite der Bankettfahrt wird hier und im Folgenden diejenige Fahrzeugseite bezeichnet, auf der sich wenigstens ein Rad des Kraftfahrzeugs in dem Bankett befindet.

Der erste und der weitere erste Kontrollwert werden insbesondere auf dieselbe Weise und aus den gleichen jeweiligen Messgrößen bestimmt, nur jeweils für unterschiedliche Räder.

Wie für den ersten Kontrollwert und den ersten weiteren Kontrollwert beschrieben, kann analog auch für jeden zusätzlichen ersten Kontrollwert ein weiterer zusätzlicher erster Kontrollwert, welcher eine Radbewegung des weiteren Rades betrifft, bestimmt werden und basierend auf einem Vergleich der jeweiligen ersten zusätzlichen Kontrollwerte mit den ersten weiteren zusätzlichen Kontrollwerten eine der Fahrzeugseiten als Seite der Bankettfahrt identifiziert werden.

Was hier für die ersten und ersten zusätzlichen Kontrollwerte ausgeführt wurde, ist analog auch für die zweiten und zweiten zusätzlichen Kontrollwerte sowie für die dritten und dritten zusätzlichen Kontrollwerte anwendbar, sofern die jeweiligen Kontrollwerte seitenspezifisch erfasst werden können.

In verschiedenen Ausführungsformen wird jeweils basierend auf unterschiedlichen Kontrollwerten und unterschiedlichen weiteren Kontrollwerten eine der Fahrzeugseiten als Seite der Bankettfahrt identifiziert. Für eine finale Identifikation der Seite der Bankettfahrt können beispielsweise mehrere der einzelnen Ergebnisse gewichtet werden.

In verschiedenen Ausführungsformen wird die Seite der Bankettfahrt nur dann bestimmt, wenn der Gesamtkonfidenzwert für das Vorliegen der Bankettfahrt größer ist als ein vorgegebener Gesamtgrenzwert.

Durch die Identifikation der Seite der Bankettfahrt kann insbesondere eine verbesserte automatisierte Reaktion auf das Vorliegen der Bankettfahrt, also ein besser angepasster Eingriff in die Fahrzeugsteuerung, automatisiert durchgeführt werden.

Gemäß zumindest einer Ausführungsform werden als wenigstens eine Messgröße eine Raddrehzahl des Rads und/oder eine Raddrehzahl des weiteren Rads erfasst.

Gemäß zumindest einer Ausführungsform beinhaltet die wenigstens eine Messgröße eine Beschleunigung des Kraftfahrzeugs, insbesondere der Karosserie, insbesondere eine longitudinale, laterale und/oder vertikale, Beschleunigung der Karosserie.

Gemäß zumindest einer Ausführungsform beinhaltet die wenigstens eine Messgröße eine Winkelbeschleunigung des Kraftfahrzeugs, insbesondere der Karosserie, insbesondere eine Drehrate, beispielsweise um die Vertikalachse des Kraftfahrzeugs. Die Winkelbeschleunigung entspricht beispielsweise einer Gierrate des Kraftfahrzeugs.

Gemäß zumindest einer Ausführungsform beinhaltet die wenigstens eine Messgröße einen Einfederweg des Rads, also insbesondere einer Federvorrichtung des Kraftfahrzeugs, welche dem Rad zugeordnet ist, und/oder des weiteren Rads.

Gemäß zumindest einer Ausführungsform beinhaltet die wenigstens eine Messgröße eine Dämpferbeschleunigung des Rads, also eine Dämpferbeschleunigung einer Dämpfervorrichtung des Kraftfahrzeugs, welche dem Rad zugeordnet ist, und/oder eine Dämpferbeschleunigung des weiteren Rads.

Gemäß zumindest einer Ausführungsform wird der erste Kontrollwert abhängig von einem ersten Mittelwert und/oder einer ersten Standardabweichung und/oder einer ersten Varianz der wenigstens einen Messgröße bestimmt.

Gemäß zumindest einer Ausführungsform wird der zweite Kontrollwert abhängig von einem zweiten Mittelwert und/oder einer zweiten Standardabweichung und/oder einer zweiten Varianz der wenigstens einen Messgröße bestimmt.

Der Mittelwert, die Standardabweichung beziehungsweise die Varianz beziehen sich dabei auf ein vordefiniertes, insbesondere gleitendes, Zeitintervall. Dementsprechend kann es sich bei dem ersten und zweiten Mittelwert, der ersten und zweiten Standardabweichung beziehungsweise der ersten und zweiten Varianz jeweils um gleitende Mittelwerte, Standardabweichungen (englisch: "moving standard deviation") beziehungsweise Varianzen handeln. Dies gilt analog für alle zusätzlichen und weiteren ersten, zweiten und dritten Kontrollwerte.

Durch die Verwendung von zeitlichen Mittelwerten beziehungsweise zeitlichen Standardabweichungen oder Varianzen wird die Robustheit des Verfahrens und letztlich die Zuverlässigkeit der Bestimmung der Bankettfahrt weiter verbessert.

Gemäß zumindest einer Ausführungsform werden der erste, der zweite und der dritte Konfidenzwert mittels der Recheneinheit mit unterschiedlichen Gewichtungsfaktoren gewichtet. Der Gesamtkonfidenzwert wird basierend auf dem gewichteten ersten und dem gewichteten zweiten Konfidenzwert und dem gewichteten dritten Konfidenzwert bestimmt.

Gemäß zumindest einer Ausführungsform beinhaltet die wenigstens eine Messgröße die Raddrehzahl des Rads. Der erste Kontrollwert wird derart abhängig von der Raddrehzahl des Rads bestimmt, dass er eine vertikale Radbewegung des Rads betrifft.

Insbesondere wird die Raddrehzahl des Rads kontinuierlich oder wiederholt während des vorgegebenen Zeitintervalls gemessen. Diskontinuitäten in dem Wert für die Raddrehzahl weisen dann beispielsweise auf vertikale Radbewegungen des Rads hin. Damit können diese sogenannten Radticks dazu verwendet werden, um von der Raddrehzahl auf eine vertikale Radbewegung, also eine Bewegung des Rades relativ zur Karosserie entlang oder parallel zur Vertikalachse des Kraftfahrzeugs, zu schließen.

Solche Ausführungsformen haben den besonderen Vorteil, dass keine spezifischen Höhenstandssensoren oder Dämpferbeschleunigungssensoren erforderlich sind, um die vertikale Radbewegung zu bestimmen. Solche Höhenstandssensoren oder Dämpferbeschleunigungssensoren sind in vielen Kraftfahrzeugen nicht standardmäßig verbaut. Dagegen sind Raddrehzahlsensoren in sehr vielen Kraftfahrzeugen verbaut, insbesondere wenn diese ein ESC-System aufweisen. Damit kann mit Vorteil ein weiterer Synergieeffekt erzielt werden, indem ohnehin vorhandene Sensoren auch zum erfindungsgemäßen Erkennen der Bankettfahrt eingesetzt werden können.

Gemäß einem weiteren unabhängigen Aspekt des verbesserten Konzepts wird ein System zum Erkennen einer Bankettfahrt eines Kraftfahrzeugs angegeben. Das System weist wenigstens eine Sensoreinheit auf, die dazu eingerichtet ist, wenigstens eine Messgröße des Kraftfahrzeugs zu erfassen, sowie eine Recheneinheit. Die Recheneinheit ist dazu eingerichtet, basierend auf der wenigstens einen Messgröße einen ersten Kontrollwert zu bestimmen, welcher eine Radbewegung eines Rads des Kraftfahrzeugs betrifft, und einen zweiten Kontrollwert zu bestimmen, welcher eine von einer Geschwindigkeit des Kraftfahrzeugs abhängige Fahrzeugzustandsgröße des Kraftfahrzeugs betrifft. Die Recheneinheit ist außerdem dazu eingerichtet, den ersten Kontrollwert mit einem ersten Grenzwert zu vergleichen und basierend auf dem Vergleich, insbesondere basierend auf einem Ergebnis des Vergleichs des ersten Kontrollwerts mit dem ersten Grenzwert, einen ersten Konfidenzwert für das Vorliegen einer Bankettfahrt zu bestimmen. Die Recheneinheit ist dazu eingerichtet, den zweiten Kontrollwert mit einem zweiten Grenzwert zu vergleichen und basierend auf dem Vergleich, insbesondere einem Ergebnis des Vergleichs zwischen dem zweiten Kontrollwert und dem zweiten Grenzwert, einen zweiten Konfidenzwert für das Vorliegen der Bankettfahrt zu bestimmen und basierend auf dem ersten und dem zweiten Konfidenzwert einen Gesamtkonfidenzwert für das Vorliegen der Bankettfahrt zu bestimmen.

Die Recheneinheit ist dazu eingerichtet, den ersten und den zweiten Konfidenzwert mit unterschiedlichen Gewichtungsfaktoren zu gewichten und einen Gesamtkonfidenzwert für das Vorliegen der Bankettfahrt basierend auf dem gewichteten ersten und dem gewichteten zweiten Konfidenzwert zu bestimmen.

Weitere Ausführungsformen des Systems zum Erkennen der Bankettfahrt folgen unmittelbar aus den verschiedenen Ausgestaltungsformen des Verfahrens zum Erkennen der Bankettfahrt nach dem verbesserten Konzept und umgekehrt. Ein System nach dem verbesserten Konzept ist insbesondere zum Durchführen eines Verfahrens nach dem verbesserten Konzept eingerichtet oder programmiert oder führt ein Verfahren nach dem verbesserten Konzept durch.

Gemäß einem weiteren unabhängigen Aspekt des verbesserten Konzepts wird ein Computerprogramm mit Befehlen angegeben, welche, bei Ausführung des Computerprogramms durch eine Recheneinheit eines Systems nach dem verbesserten Konzept, das System dazu veranlassen, ein Verfahren nach dem verbesserten Konzept durchzuführen.

Gemäß einem weiteren unabhängigen Aspekt des verbesserten Konzepts wird ein computerlesbares Speichermedium angegeben, auf welchem ein Computerprogramm nach dem verbesserten Konzept gespeichert ist.

Gemäß einem weiteren unabhängigen Aspekt des verbesserten Konzepts wird ein Kraftfahrzeug mit einem System zum Erkennen einer Bankettfahrt nach dem verbesserten Konzept angegeben.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Systems beschrieben sind. Aus diesem Grund sind die entsprechenden Weiterbildungen des erfindungsgemäßen Verfahrens hier nicht notwendigerweise noch einmal beschrieben.

Die Erfindung umfasst auch die Kombinationen der Merkmale der beschriebenen Ausführungsformen.

Im Folgenden sind Ausführungsbeispiele der Erfindung beschrieben. Hierzu zeigen:
- Fig. 1: ein Ablaufdiagramm eines Verfahrens zum Beenden einer Bankettfahrt eines Kraftfahrzeugs mit einer beispielhaften Ausgestaltungsform eines Verfahrens zum Erkennen einer Bankettfahrt nach dem verbesserten Konzept;
- Fig. 2: ein Kraftfahrzeug mit einer beispielhaften Ausgestaltungsform eines Systems zum Erkennen einer Bankettfahrt nach dem verbesserten Konzept; und
- Fig. 3: eine weitere beispielhafte Ausführungsform eines Verfahrens zum Erkennen einer Bankettfahrt nach dem verbesserten Konzept.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

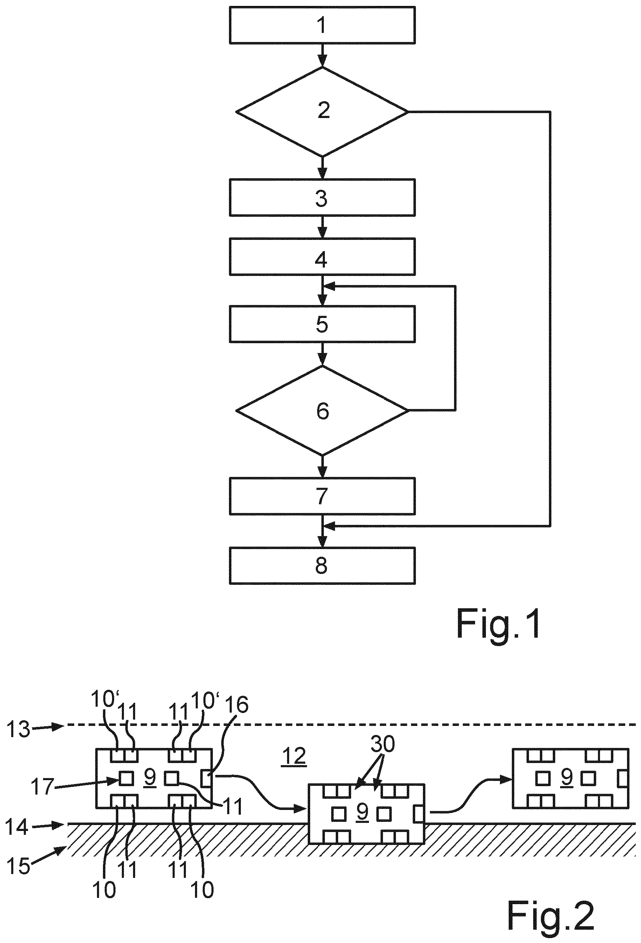

Fig. 1 zeigt ein Ablaufdiagramm einer beispielhaften Ausführungsform eines Verfahrens zum Beenden einer Bankettfahrt.

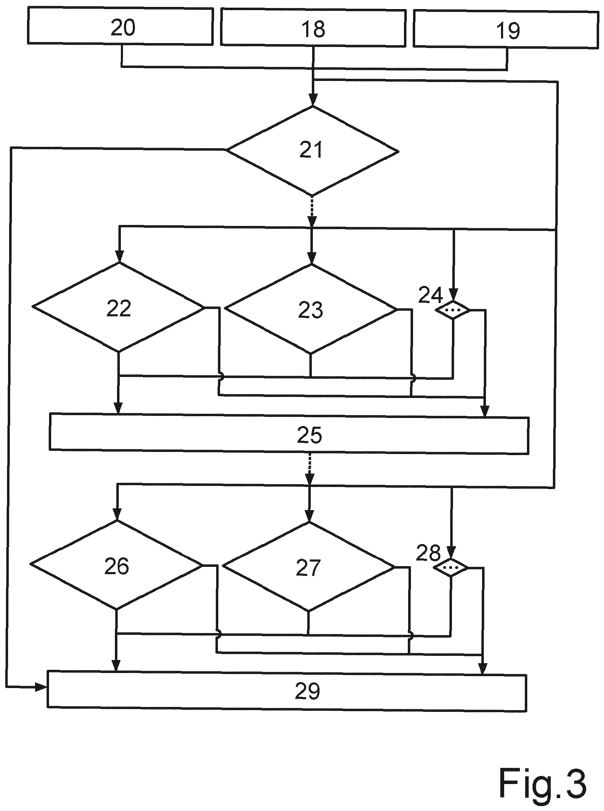

In einem Schritt 1 des Verfahrens wird ein Verfahren zum Erkennen einer Bankettfahrt eines Kraftfahrzeugs 9 nach dem verbesserten Konzept durchgeführt. Als Ergebnis wird beispielsweise einem Gesamtkonfidenzwert für das Vorliegen der Bankettfahrt ermittelt. Für weiterführende Details wird auf die Beschreibung zu Fig. 3 verwiesen.

Im Schritt 2 des Verfahrens wird beispielsweise der Gesamtkonfidenzwert mit einem Mindestwert oder Minimalwert verglichen. Ist der Gesamtkonfidenzwert kleiner als der Minimalwert, so wird das Verfahren mit Schritt 8 fortgeführt, wobei insbesondere keine Aktion durchgeführt wird, um die Bankettfahrt zu beenden, da der Gesamtkonfidenzwert darauf schließen lässt, dass eine Bankettfahrt nicht vorliegt.

Ist der Gesamtkonfidenzwert dagegen größer oder gleich dem Minimalwert, wird im Schritt 3 des Verfahrens beispielsweise eine Reaktion eines Fahrers des Kraftfahrzeugs 9 auf das Vorliegen der Bankettfahrt ermittelt. Im Schritt 4 des Verfahrens kann beispielsweise mittels eines Systems zum Verlassen der Bankettfahrt beziehungsweise zum Beenden der Bankettfahrt eine Maßnahme eingeleitet werden, beispielsweise abhängig von der ermittelten Fahrerreaktion. Die Maßnahme kann beispielsweise eine Warnung, eine Stabilisierung oder eine Agilisierung, insbesondere eine automatische Stabilisierung oder Agilisierung, durch Eingriff in die Fahrzeugsteuerung, beispielsweise durch Eingriff in eine Lenkung des Kraftfahrzeugs, durchgeführt werden. In Schritt 5 kann die Maßnahme weitergeführt werden.

In Schritt 6 kann beispielsweise bestimmt werden, ob das Kraftfahrzeug 9 das Bankett 15 verlassen hat. Dazu kann insbesondere erneut ein Verfahren zum Erkennen einer Bankettfahrt nach dem verbesserten Konzept durchgeführt werden und der resultierende Gesamtkonfidenzwert mit dem Minimalwert verglichen werden. Ist der Gesamtkonfidenzwert nun immer noch größer oder gleich dem Minimalwert, so wird mit Schritt 5 weiterverfahren. Wird im Schritt 6 ermittelt, dass der Gesamtkonfidenzwert nun kleiner ist als der Minimalwert, so wird die Maßnahme in Schritt 7 beendet und in Schritt 8 wird die Normalfahrt fortgesetzt.

In Fig. 2 ist ein Kraftfahrzeug 9 schematisch dargestellt, welches eine beispielhafte Ausführungsform eines Systems 30 zum Erkennen einer Bankettfahrt des Kraftfahrzeugs 9 beinhaltet. Links in Fig. 2 ist das Kraftfahrzeug 9 gezeigt, wie es sich auf einer Fahrbahn 12, also insbesondere zwischen einer Fahrstreifenmarkierungslinie 13 und einer Fahrbahnkante 14 befindet. In der Mitte von Fig. 2 befindet sich das Kraftfahrzeug 9 teilweise in einem Bankett 15. Insbesondere befinden sich die rechten Räder des Kraftfahrzeugs 9 im Bankett 15 und die linken Räder des Kraftfahrzeugs 9 befinden sich auf der Fahrbahn 12.

Rechts in Fig. 2 ist das Kraftfahrzeug 9 gezeigt, nachdem es sich, beispielsweise unter Verwendung eines Verfahrens zum Beenden der Bankettfahrt, wie es bezüglich Fig. 1 beschrieben wurde, wieder vollständig auf der Fahrbahn 12 befindet.

Das System 30 zum Beenden der Bankettfahrt beinhaltet beispielsweise jeweilige Messeinheiten 10 zur Bestimmung von Radbewegungen der rechten Räder des Kraftfahrzeugs 9 und entsprechende Messeinheiten 10' zur Bestimmung der Radbewegungen der linken Räder des Kraftfahrzeugs 9. Insbesondere können mittels der Messeinheiten 10, 10' ein Dämpferweg und/oder eine Raddrehzahl der jeweiligen Räder bestimmt werden.

Das System 30 kann außerdem eine oder mehrere Messeinheiten 11 zur Bestimmung von einer oder mehreren Fahrzeugszustandsgrößen, beispielsweise einer Karosseriegeschwindigkeit, einer Gierrate oder eine longitudinalen, lateralen oder vertikalen Beschleunigung des Kraftfahrzeugs 9, insbesondere einer Karosserie des Kraftfahrzeugs 9, beinhalten.

Optional kann das System 30 eine Umfeldsensoreinheit 16, beispielsweise eine Kamera, ein Lidarsystem, ein Radarsystem oder ein Ultraschallsensorsystem, beinhalten, um Infrastrukturmerkmale, beispielsweise Fahrstreifenmarkierungslinien 13, Fahrbahnkanten 14, Freiräume auf der Fahrbahn 12, Hindernisse auf der Fahrbahn 12 und/oder eine Art der Oberfläche der Fahrbahn 12 beziehungsweise des Banketts 15, zu bestimmen.

Das System 30 weist außerdem eine Recheneinheit 17 auf. Die Recheneinheit 17 ist dazu eingerichtet, basierend auf Messgrößen, welche mittels der Messeinheiten 10, 10', 11 sowie gegebenenfalls der Umfeldsensoreinheit 16 erfasst wurden, einen ersten Kontrollwert, welcher eine Radbewegung des jeweiligen Rads des Kraftfahrzeugs betrifft, sowie einen zweiten Kontrollwert, welcher eine Geschwindigkeitsgröße des Kraftfahrzeugs betrifft, zu bestimmen und, falls zutreffend, basierend auf den Umfeldsensorsignalen der Umfeldsensoreinheit 16 einen dritten Kontrollwert zu bestimmen.

Die Recheneinheit 17 ist dazu eingerichtet, jeden der Kontrollwerte mit einem jeweiligen Grenzwert zu vergleichen und basierend darauf einen jeweiligen Konfidenzwert für das Vorliegen der Bankettfahrt zu bestimmen und basierend auf den jeweiligen Konfidenzwerten einen Gesamtkonfidenzwert für das Vorliegen der Bankettfahrt zu bestimmen.

Für weitere Einzelheiten wird auf die Ausführungen zu Fig. 3 verwiesen.

In Fig. 3 ist eine beispielhafte Ausführungsform eines Verfahrens zum Erkennen einer Bankettfahrt als entsprechendes Ablaufdiagramm dargestellt.

In einem Schritt 18 werden beispielsweise mittels wenigstens einer der Messeinheiten 10, 10' eine oder mehrere Messgrößen, welche beispielsweise Fahrzeugszustandsgrößen wie Fahrzeuggeschwindigkeit, Gierrate oder Beschleunigungen beinhalten, erfasst. In Schritt 19 wird beispielsweise mittels einer der Messeinheiten 11 eine weitere Messgröße zur Erkennung einer Radbewegung der Räder des Kraftfahrzeugs 9 erfasst. Optional wird in Schritt 20 ein Umfeldsensorsignal mittels der Umfeldsensoreinheit 16 erzeugt.

In dem optionalen Schritt 21 wird eine Voranalyse durchgeführt, insbesondere basierend auf den Umfeldsensorsignalen. Mittels der Voranalyse kann beispielsweise erkannt werden, ob sich das Kraftfahrzeug 9 offensichtlich und eindeutig auf der Fahrbahn 12 befindet. Dies kann beispielsweise derart erfolgen, dass erkannt wird, dass links und rechts vom Kraftfahrzeug 9 jeweils Fahrstreifenmarkierungslinien 13 und/oder Fahrbahnkanten 14 sichtbar sind und sich das Kraftfahrzeug 9 zwischen diesen befindet. Alternativ oder zusätzlich kann basierend auf dem Umfeldsensorsignal eine Klassifizierung zur Erkennung der Fahrbahnoberfläche erfolgen und der Bereich, auf welchem das Kraftfahrzeug 9 fährt, eindeutig und sicher als Fahrbahn 12 klassifiziert werden. Ergibt sich in Schritt 21, dass offensichtlich und eindeutig eine Fahrt auf der Fahrbahn 12 vorliegt, dass also die Bankettfahrt mit hinreichender Wahrscheinlichkeit ausgeschlossen werden kann, wird das Verfahren in Schritt 29 beendet, indem die gegenwärtige Situation nicht als Bankettfahrt erkannt wird und der Gesamtkonfidenzwert beispielsweise gleich Null gesetzt wird.

Ergibt sich in Schritt 21 jedoch, dass die Bankettfahrt nicht anhand der Voranalyse ausgeschlossen werden kann, wird mit den Schritten 22 und 23 sowie optionalen mit dem Schritt 24 weiter verfahren.

Im Schritt 22 wird ein erster Kontrollwert basierend auf den in Schritt 18 erfassten Messgrößen bestimmt, insbesondere indem die jeweiligen Messgrößen über ein vorgegebenes Zeitintervall gemittelt werden. Ist die jeweilige gemittelte Messgröße kleiner als ein erster Schwellwert, so kann dies beispielsweise ein Hinweis auf eine Fahrt des jeweiligen Rades auf der Fahrbahn 12 sein. Ist die gemittelte Messgröße größer oder gleich dem ersten Grenzwert, so kann dies eine Indikation für eine Fahrt des jeweiligen Rades im Bankett 15 sein.

Analog erfolgt eine entsprechende Auswertung in Schritt 23 für die in Schritt 19 aufgenommenen Messgrößen. Optional kann in Schritt 24 für die in dem optionalen Schritt 20 aufgenommenen Umfeldsensorsignale eine entsprechende Auswertung vorgenommen werden.

Jeder Vergleich eines der gemittelten Messgrößen mit dem einen zugehörigen Grenzwert liefert dann einen einzelnen Konfidenzwert für das Vorliegen der Bankettfahrt.

Die Vergleiche, die in Schritt 22 bis 24 vorgenommen werden, können beispielsweise einen oder mehrere der folgenden Vergleiche enthalten:
- Ist die gleitende Standardabweichung, MSD (englisch: Moving Standard Deviation) einer jeweiligen Radgeschwindigkeit größer als der zugehörige Schwellwert?
- Ist die MSD einer jeweiligen vertikalen Beschleunigung größer als der zugehörige Schwellwert?
- Ist die MSD für einen jeweiligen Radschlupf größer als der zugehörige Schwellwert? Ist die MSD einer Gierrate größer als der zugehörige Schwellwert?
- Ist die MSD einer Querbeschleunigung größer als der zugehörige Schwellwert? Ist die MSD eines Lenkmoments kleiner als der zugehörige Schwellwert?
- Ist ein lateraler Versatz des Kraftfahrzeugs 9 zur relevanten Fahrstreifenmarkierungslinie 13 größer als der zugehörige Schwellwert?
- Ist ein lateraler Versatz des Fahrzeugs zur relevanten Fahrbahnkante 14 größer als der zugehörige Schwellwert?
- Ist der laterale Versatz eines jeden Rades des Kraftfahrzeugs 9 zur relevanten Fahrstreifenmarkierungslinie 13, berechnet beispielsweise anhand des lateralen Versatzes des Fahrzeugs zur relevanten Fahrstreifenmarkierung 13 und einem relativen Winkel zwischen Bewegungsrichtung des Kraftfahrzeugs 9 und der relevanten Fahrstreifenmarkierungslinie 13 größer als der zugehörige Schwellwert?
- Ist der laterale Versatz eines jeden Rades des Kraftfahrzeugs zur relevanten Fahrbahnkante 14, berechnet beispielsweise anhand des lateralen Versatzes des Kraftfahrzeugs 9 zur relevanten Fahrbahnkante 14 und dem relativen Winkel zwischen der Bewegungsrichtung des Kraftfahrzeugs 9 und der relevanten Fahrbahnkante 14, größer als der zugehörige Schwellwert?

Je deutlicher ein jeweiliger Kontrollwert seinen individuellen Schwell- oder Grenzwert überschreitet, desto höher ist die Wahrscheinlichkeit für eine Bankettfahrt, welche aus dem jeweiligen Messsignal abgeleitet werden kann. Aus den gewichteten einzelnen Konfidenzwerten oder Einzelwahrscheinlichkeiten wird in Schritt 25 ein Gesamtkonfidenzwert, welcher eine Gesamtzutreffenswahrscheinlichkeit für die Bankettfahrt beschreibt, ermittelt. Je mehr Messgrößen ihre individuellen Schwellwerte überschreiten, also auf eine Bankettfahrt hindeuten, desto höher ist der Gesamtkonfidenzwert. Der Gesamtkonfidenzwert kann insbesondere aus denjenigen der Kontrollwerte ermittelt werden, welche den individuellen Schwellwert überschritten haben.

In den Schritten 26 bis 28 kann für diejenigen der Messgrößen, für welche eine seitenspezifische Aussage getroffen werden kann, eine Klassifizierung oder Ermittlung der Seite der Bankettfahrt erfolgen. Dabei wird ermittelt, ob das Kraftfahrzeug 9 mit seinen rechten oder linken Rädern im Bankett 15 fährt. Für jede der Messgrößen, für die seitenspezifische Pendants existieren, wird der jeweilige Kontrollwert mit einem korrespondierenden Kontrollwert der zur gegenüberliegenden Seite des Kraftfahrzeugs 9 gehörenden Messgröße verglichen. Ist der jeweilige Kontrollwert auf einer Seite größer als auf der anderen, dann deutet dies beispielsweise darauf hin, dass das Kraftfahrzeug 9 mit den Rädern der Seite, auf der das größere Messsignal ermittelt wurde, im Bankett 15 fährt.

Insbesondere können in den Schritten 26 bis 28 Radgeschwindigkeiten von linken und rechten Rädern der Vorderachse und/oder von linken und rechten Rädern der Hinterachse miteinander verglichen werden und/oder eine Vertikalbeschleunigung an linken und rechten Rädern der Vorder- oder Hinterachse und/oder ein Radschlupf an linken und rechten Rädern der Vorder- oder Hinterachse. Alternativ oder zusätzlich können jeweilige Werte für einen Lateralversatz des Kraftfahrzeugs 9 bezogen auf die linke und die rechte Fahrstreifenmarkierungslinie 13 miteinander verglichen werden und/oder Werte eines Lateralversatz des Kraftfahrzeugs 9 bezogen auf die linke und die rechte Fahrbahnkante 14.

Gemäß dem verbesserten Konzept wird eine sichere Detektion, ob sich das Kraftfahrzeug 9 auf der Fahrbahn 12 oder im Bankett 15 befindet, ermöglicht. Optional kann klassifiziert werden, ob sich die rechten oder die linken Räder des Kraftfahrzeugs 9 im Bankett 15 befinden.

Nach dem verbesserten Konzept werden Kontrollwerte unterschiedlicher Messgrößen, insbesondere unterschiedlicher Arten oder Klassen von Messgrößen, bestimmt und zunächst unabhängig voneinander hinsichtlich des Vorliegens der Bankettfahrt ausgewertet. Die einzelnen Kontrollwerte ergeben jeweilige einzelne Konfidenzwerte für das Vorliegen der Bankettfahrt. Die Einzelkonfidenzwerte werden zu einem Gesamtkonfidenzwert verarbeitet, welcher eine zuverlässige Detektion der Bankettfahrt ermöglicht.

Es können beispielsweise Messeinheiten zur Erkennung einer Radbewegung in vertikaler Richtung, wie beispielsweise eines Einfederwegs oder einer Dämpferbeschleunigung, und/oder in horizontaler Richtung, wie beispielsweise einer Raddrehzahl und daraus abgeleitet eines Radschlupf, eingesetzt werden. Dazu können beispielsweise DCC-Höhenstandssensoren oder Raddrehzahlsensoren eingesetzt werden.

Weiterhin können Messeinheiten zur Detektion von Fahrzeugzustandsgrößen, wie beispielsweise einer Geschwindigkeit, Gierrate oder longitudinalen, lateralen oder vertikalen Beschleunigung des Fahrzeugs eingesetzt werden. Dazu können Raddrehzahl-, Beschleunigungs- oder Drehratensensoren eingesetzt werden.

Optional können zusätzlich auch Umfeldsensoreinheiten zur Erkennung von Infrastrukturmerkmalen wie beispielsweise Fahrstreifenmarkierungslinien, Fahrbahnkanten, Freiräumen, Hindernissen oder zur Klassifizierung der Fahrbahnoberfläche eingesetzt werden. Dies kann beispielsweise mittels einer Kamera erfolgen. Die Klassifizierung der Oberfläche kann in verschiedenen Bildsegmenten, im einfachsten Fall in "Fahrbahn" und "Nicht-Fahrbahn" erfolgen. Bildverarbeitungsalgorithmen zur Klassifizierung der Oberfläche können mithilfe von maschinellen Lernverfahren (künstliche neuronale Netzwerke, Maschinenlernen, Deep Learning) und Bild-Lern-Daten trainiert werden. Alternativ oder ergänzend kann auch die Nutzung einer hochgenauen Karte in Verbindung mit einer hochgenauen Lokalisierung eingesetzt werden.

Das verbesserte Konzept erlaubt ein einfaches und robustes Verfahren zur Auswertung der Sensorinformationen für eine Detektion und Klassifizierung der Bankettfahrt. Insbesondere ist das eingesetzte Verfahren weniger komplex und transparenter als ein Verfahren, das beispielsweise auf der Auswertung von Informationen verschiedenartiger Sensoren mit verschiedenartigen Ausgangsgrößen basieren, wie Bayessche Netze oder künstliche Neuronale Netze oder auch Verfahren basierend auf der Dempster-Shafer Evidenztheorie.

## Patentansprüche

1. Verfahren zum Erkennen einer Bankettfahrt eines Kraftfahrzeugs (9), wobei wenigstens eine Messgröße mittels wenigstens einer Sensoreinheit (10, 10', 11, 16) des Kraftfahrzeugs (9) erfasst wird und mittels einer Recheneinheit (17) des Kraftfahrzeugs (9)
- basierend auf der wenigstens einen Messgröße ein erster Kontrollwert, welcher eine Radbewegung eines Rads des Kraftfahrzeugs (9) betrifft, bestimmt wird;
- basierend auf der wenigstens einen Messgröße ein zweiter Kontrollwert, welcher eine von einer Geschwindigkeit des Kraftfahrzeugs (9) abhängige Fahrzeugzustandsgröße betrifft, bestimmt wird;
- basierend auf einem Vergleich des ersten Kontrollwerts mit einem ersten Grenzwert ein erster Konfidenzwert für das Vorliegen einer Bankettfahrt bestimmt wird;
- basierend auf einem Vergleich des zweiten Kontrollwerts mit einem zweiten Grenzwert ein zweiter Konfidenzwert für das Vorliegen der Bankettfahrt bestimmt wird; **dadurch gekennzeichnet, dass**
- der erste Konfidenzwert und der zweite Konfidenzwert mittels der Recheneinheit (17) mit unterschiedlichen Gewichtungsfaktoren gewichtet werden; und
- ein Gesamtkonfidenzwert für das Vorliegen der Bankettfahrt basierend auf dem gewichteten ersten und dem gewichteten zweiten Konfidenzwert bestimmt wird.

2. Verfahren nach Anspruch 1,
**dadurch gekennzeichnet, dass**,
- mittels der wenigstens einen Sensoreinheit (10, 10', 11, 16) ein Fahrbahnkennwert erzeugt wird und/oder ein Umfeldsensorsignal erzeugt wird;
- mittels der Recheneinheit (17) basierend auf dem Fahrbahnkennwert und/oder dem Umfeldsensorsignal bestimmt wird, ob das Vorliegen der Bankettfahrt ausgeschlossen werden kann.

3. Verfahren nach einem der Ansprüche 1 oder 2,
**dadurch gekennzeichnet, dass**
- wenigstens ein weiteres Umfeldsensorsignal mittels der wenigstens einen Sensoreinheit (10, 10', 11, 16) erzeugt wird;
- basierend auf dem wenigstens einen weiteren Umfeldsensorsignal mittels der Recheneinheit (17) ein dritter Kontrollwert bestimmt wird;
- basierend auf einem Vergleich des dritten Kontrollwerts mit einem dritten Grenzwert mittels der Recheneinheit (17) ein dritter Konfidenzwert für das Vorliegen der Bankettfahrt bestimmt wird; und
- der Gesamtkonfidenzwert basierend auf dem ersten, dem zweiten und dem dritten Konfidenzwert bestimmt wird.

4. Verfahren nach einem der Ansprüche 1 bis 3,
**dadurch gekennzeichnet, dass**
- basierend auf der wenigstens einen Messgröße mittels der Recheneinheit (17) ein weiterer erster Kontrollwert, welcher eine Radbewegung eines weiteren Rads des Kraftfahrzeugs (9) betrifft, bestimmt wird, wobei das Rad und das weitere Rad auf gegenüberliegenden Fahrzeugseiten angeordnet sind; und
- mittels der Recheneinheit basierend auf einem Vergleich des ersten Kontrollwerts mit dem weiteren ersten Kontrollwert eine der Fahrzeugseiten als Seite der Bankettfahrt identifiziert wird.

5. Verfahren nach einem der Ansprüche 1 bis 4,
**dadurch gekennzeichnet, dass** zum Erfassen der wenigstens einen Messgröße
- eine Raddrehzahl des Rads; und/oder
- eine Beschleunigung des Kraftfahrzeugs (9); und/oder
- eine Winkelbeschleunigung des Kraftfahrzeugs (9); und/oder
- einen Einfederweg des Rads; und/oder
- eine Dämpferbeschleunigung des Rads;
erfasst wird.

6. Verfahren nach einem der Ansprüche 1 bis 5
**dadurch gekennzeichnet, dass**
- der erste Kontrollwert abhängig von einem ersten Mittelwert und/oder einer ersten Standardabweichung und/oder einer ersten Varianz der wenigstens einen Messgröße bestimmt wird; und/oder
- der zweite Kontrollwert abhängig von einem zweiten Mittelwert und/oder einer zweiten Standardabweichung und/oder einer zweiten Varianz der wenigstens einen Messgröße bestimmt wird.

7. Verfahren nach einem der Ansprüche 1 bis 6,
**dadurch gekennzeichnet, dass**
- die wenigstens eine Messgröße eine Raddrehzahl des Rads beinhaltet; und
- der erste Kontrollwert abhängig von der Raddrehzahl bestimmt wird, derart, dass er eine vertikale Radbewegung des Rads betrifft;
- die Raddrehzahl des Rads kontinuierlich oder wiederholt während eines vorgegebenen Zeitintervalls gemessen wird und Diskontinuitäten in dem gemessenen Wert für die Raddrehzahl dazu verwendet werden, um von der Raddrehzahl auf die vertikale Radbewegung zu schließen.

8. System zum Erkennen einer Bankettfahrt eines Kraftfahrzeugs (9), wobei das System (30) wenigstens eine Sensoreinheit (10, 10', 11, 16) aufweist, die dazu eingerichtet ist, wenigstens eine Messgröße des Kraftfahrzeugs (9) zu erfassen, und eine Recheneinheit (17) aufweist, die dazu eingerichtet ist,
- basierend auf der wenigstens einen Messgröße einen ersten Kontrollwert, welcher eine Radbewegung eines Rads des Kraftfahrzeugs (9) betrifft, zu bestimmen;
- einen zweiten Kontrollwert, welcher eine von einer Geschwindigkeit des Kraftfahrzeugs (9) abhängige Fahrzeugzustandsgröße betrifft, zu bestimmen;
- den ersten Kontrollwert mit einem ersten Grenzwert zu vergleichen und basierend auf dem Vergleich einen ersten Konfidenzwert für das Vorliegen einer Bankettfahrt zu bestimmen;
- den zweiten Kontrollwert mit einem zweiten Grenzwert zu vergleichen und basierend auf dem Vergleich einen zweiten Konfidenzwert für das Vorliegen der Bankettfahrt zu bestimmen; **dadurch gekennzeichnet, dass** die Recheneinheit ferner dazu eingerichtet ist
- den ersten Konfidenzwert und den zweite Konfidenzwert mit unterschiedlichen Gewichtungsfaktoren zu gewichten; und
- einen Gesamtkonfidenzwert für das Vorliegen der Bankettfahrt basierend auf dem gewichteten ersten und dem gewichteten zweiten Konfidenzwert zu bestimmen.

9. Computerprogramm mit Befehlen, welche, bei Ausführung des Computerprogramms durch eine Recheneinheit (17) eines Systems (30) nach Anspruch 8, das System (30) dazu veranlassen, ein Verfahren nach einem der Ansprüche 1 bis 7 durchzuführen.

## Claims

1. Method for detecting a motor vehicle (9) driving on a verge, at least one measured variable being recorded by means of at least one sensor unit (10, 10', 11, 16) of the motor vehicle (9), and by means of a computing unit (17) of the motor vehicle (9):
- a first control value relating to a wheel movement of a wheel of the motor vehicle (9) being determined based on the at least one measured variable;
- a second control value relating to a vehicle state variable dependent on a speed of the motor vehicle (9) being determined based on the at least one measured variable;
- a first confidence value for the verge being driven on being determined based on a comparison of the first control value with a first limit value;
- a second confidence value for the verge being driven on being determined based on a comparison of the second control value with a second limit value;
**characterized in that**
- the first confidence value and the second confidence value are weighted, using different weighting factors, by means of the computing unit (17); and
- a total confidence value for the verge being driven on is determined based on the weighted first and the weighted second confidence value.

2. Method according to claim 1,
**characterized in that:**
- a road characteristic value is generated and/or an environment sensor signal is generated by means of the at least one sensor unit (10, 10', 11, 16);
- it is determined, by means of the computing unit (17), based on the road characteristic value and/or the environment sensor signal, whether the verge being driven on can be ruled out.

3. Method according to either claim 1 or claim 2,
**characterized in that**
- at least one additional environment sensor signal is generated by means of the at least one sensor unit (10, 10', 11, 16);
- a third control value is determined, by means of the computing unit (17), based on the at least one additional environmental sensor signal;
- a third confidence value for the verge being driven on is determined, by means of the computing unit (17), based on a comparison of the third control value with a third limit value; and
- the total confidence value is determined based on the first, the second and the third confidence value.

4. Method according to any of claims 1 to 3,
**characterized in that**
- an additional first control value relating to a wheel movement of an additional wheel of the motor vehicle (9) is determined, by means of the computing unit (17), based on the at least one measured variable, the wheel and the additional wheel being arranged on opposite sides of the vehicle; and
- one of the vehicle sides is identified as the side on which the verge is being driven on, by means of the computing unit, based on a comparison of the first control value with the additional first control value.

5. Method according to any of claims 1 to 4,
**characterized in that** for recording the at least one measured variable
- a wheel speed of the wheel; and/or
- an acceleration of the motor vehicle (9); and/or
- an angular acceleration of the motor vehicle (9); and/or
- a compression travel of the wheel; and/or
- a damper acceleration of the wheel;
is recorded.

6. Method according to any of claims 1 to 5,
**characterized in that**
- the first control value is determined as a function of a first mean value and/or of a first standard deviation and/or of a first variance of the at least one measured variable; and/or
- the second control value is determined as a function of a second mean value and/or of a second standard deviation and/or of a second variance of the at least one measured variable.

7. Method according to any of claims 1 to 6,
**characterized in that:**
- the at least one measured variable includes a wheel speed of the wheel; and
- the first control value is determined as a function of the wheel speed such that the first control value relates to a vertical wheel movement of the wheel;
- the wheel speed of the wheel is measured continuously or repeatedly during a predetermined time interval and discontinuities in the measured wheel speed value are used to infer the vertical wheel movement from the wheel speed.

8. System for detecting a motor vehicle (9) driving on a verge, the system (30) having at least one sensor unit (10, 10', 11, 16) which is designed to record at least one measured variable of the motor vehicle (9), and a computing unit (17) which is designed to:
- determine a first control value relating to a wheel movement of a wheel of the motor vehicle (9) based on the at least one measured variable;
- determine a second control value relating to a vehicle state variable dependent on a speed of the motor vehicle (9);
- compare the first control value with a first limit value and, based on the comparison, determine a first confidence value for the verge being driven on;
- compare the second control value with a second limit value and, based on the comparison, determine a second confidence value for the verge being driven on; **characterized in that** the computing unit is further designed to:
- weight, using different weighting factors, the first confidence value and the second confidence value; and
- determine a total confidence value for the verge being driven on based on the weighted first and the weighted second confidence value.

9. Computer program comprising instructions which, when the computer program is run by a computing unit (17) of a system (30) according to claim 8, cause the system (30) to carry out a method according to any of claims 1 to 7.

## Revendications

1. Procédé pour la reconnaissance d'une conduite sur accotement d'un véhicule automobile (9), dans lequel au moins une grandeur de mesure est détectée au moyen d'au moins une unité formant capteur (10, 10', 11, 16) du véhicule automobile (9) et, au moyen d'une unité de calcul (17) du véhicule automobile (9),
- une première valeur de contrôle, laquelle concerne un mouvement de roue d'une roue du véhicule automobile (9), est déterminée sur la base de l'au moins une grandeur de mesure ;
- une deuxième valeur de contrôle, laquelle concerne une grandeur d'état de véhicule dépendant d'une vitesse du véhicule automobile (9), est déterminée sur la base de l'au moins une grandeur de mesure ;
- sur la base d'une comparaison de la première valeur de contrôle avec une première valeur limite, une première valeur de confiance pour l'existence d'une conduite sur accotement est déterminée ;
- sur la base d'une comparaison de la deuxième valeur de contrôle avec une deuxième valeur limite, une deuxième valeur de confiance pour l'existence de la conduite sur accotement est déterminée ; **caractérisé en ce que**
- la première valeur de confiance et la deuxième valeur de confiance sont pondérées avec des facteurs de pondération différents au moyen de l'unité de calcul (17) ; et
- une valeur de confiance totale pour l'existence de la conduite sur accotement est déterminée sur la base de la première valeur de confiance pondérée et de la deuxième valeur de confiance pondérée.

2. Procédé selon la revendication 1,
**caractérisé en ce que,**
- une valeur caractéristique de chaussée est générée et/ou un signal de capteur d'environnement est généré au moyen de l'au moins une unité formant capteur (10, 10', 11, 16) ;
- on détermine au moyen de l'unité de calcul (17), sur la base de la valeur caractéristique de chaussée et/ou du signal de capteur d'environnement, si l'existence de la conduite sur accotement peut être exclue.

3. Procédé selon l'une des revendications 1 ou 2,
**caractérisé en ce que**
- au moins un autre signal de capteur d'environnement est généré au moyen de l'au moins une unité formant capteur (10, 10', 11, 16) ;
- une troisième valeur de contrôle est déterminée au moyen de l'unité de calcul (17) sur la base de l'au moins un autre signal de capteur d'environnement ;
- sur la base d'une comparaison de la troisième valeur de contrôle avec une troisième valeur limite, une troisième valeur de confiance pour l'existence de la conduite sur accotement est déterminée au moyen de l'unité de calcul (17) ; et
- la valeur de confiance totale est déterminée sur la base de la première, de la deuxième et de la troisième valeur de confiance.

4. Procédé selon l'une des revendications 1 à 3,
**caractérisé en ce que**
- sur la base de l'au moins une grandeur de mesure, une autre première valeur de contrôle, laquelle concerne un mouvement de roue d'une autre roue du véhicule automobile (9), est déterminée au moyen de l'unité de calcul (17), dans lequel la roue et l'autre roue sont disposées sur des côtés opposés du véhicule ; et
- l'un des côtés du véhicule est identifié comme côté de la conduite sur accotement au moyen de l'unité de calcul sur la base d'une comparaison de la première valeur de contrôle avec l'autre première valeur de contrôle.

5. Procédé selon l'une des revendications 1 à 4,
**caractérisé en ce que,** pour la détection de l'au moins une grandeur de mesure,
- une vitesse de rotation de roue de la roue ; et/ou
- une accélération du véhicule automobile (9) ; et/ou
- une accélération angulaire du véhicule automobile (9) ; et/ou
- un débattement de la roue ; et/ou
- une accélération d'amortisseur de la roue ;
sont détectés.

6. Procédé selon l'une des revendications 1 à 5,
**caractérisé en ce que**
- la première valeur de contrôle est déterminée en fonction d'une première valeur moyenne et/ou d'un premier écart-type et/ou d'une première variance de l'au moins une grandeur de mesure ; et/ou
- la deuxième valeur de contrôle est déterminée en fonction d'une seconde valeur moyenne et/ou d'un second écart-type et/ou d'une seconde variance de l'au moins une grandeur de mesure.

7. Procédé selon l'une des revendications 1 à 6,
**caractérisé en ce que**
- l'au moins une grandeur de mesure comprend une vitesse de rotation de roue de la roue ; et
- la première valeur de contrôle est déterminée en fonction de la vitesse de rotation de roue, de telle sorte qu'elle concerne un mouvement de roue vertical de la roue ;
- la vitesse de rotation de roue de la roue est mesurée en continu ou de manière répétée pendant un intervalle de temps prédéfini et des discontinuités de la valeur mesurée pour la vitesse de rotation de roue sont utilisées afin de déduire le mouvement de roue vertical de la vitesse de rotation de roue.

8. Système pour la reconnaissance d'une conduite sur accotement d'un véhicule automobile (9), dans lequel le système (30) présente au moins une unité formant capteur (10, 10', 11, 16) qui est configurée pour détecter au moins une grandeur de mesure du véhicule automobile (9), et présente une unité de calcul (17) qui est configurée pour
- déterminer, sur la base de l'au moins une grandeur de mesure, une première valeur de contrôle qui concerne un mouvement de roue d'une roue du véhicule automobile (9) ;
- déterminer une deuxième valeur de contrôle qui concerne une grandeur d'état de véhicule dépendant d'une vitesse du véhicule automobile (9) ;
- comparer la première valeur de contrôle avec une première valeur limite et, sur la base de la comparaison, déterminer une première valeur de confiance pour l'existence d'une conduite sur accotement ;
- comparer la deuxième valeur de contrôle avec une deuxième valeur limite et déterminer, sur la base de la comparaison, une deuxième valeur de confiance pour l'existence de la conduite sur accotement ; **caractérisé en ce que** l'unité de calcul est en outre configurée pour
- pondérer la première valeur de confiance et la deuxième valeur de confiance avec des facteurs de pondération différents ; et
- déterminer une valeur de confiance totale pour l'existence de la conduite sur accotement sur la base de la première valeur de confiance pondérée et de la deuxième valeur de confiance pondérée.

9. Programme informatique comportant des instructions qui, lorsque le programme informatique est exécuté par une unité de calcul (17) d'un système (30) selon la revendication 8, amènent le système (30) à réaliser un procédé selon l'une des revendications 1 à 7.
